## Europäisches Patentamt

## European Patent Office

## Office européen des brevets

(19)

(11) Veröffentlichungsnummer: **0 205 763**
**B1**

(12) **EUROPÄISCHE PATENTSCHRIFT**

(45) Veröffentlichungstag der Patentschrift:
21.06.89

(51) Int. Cl.⁴: **G01P 3/481**

(21) Anmeldenummer: 86103371.0

(22) Anmeldetag: 13.03.86

(54) Einrichtung zur Gewinnung von Drehzahl- und/oder Drehwinkelsignalen an einer Gelenkwelle.

(30) Priorität: 15.06.85 DE 3521606

(43) Veröffentlichungstag der Anmeldung:
30.12.86 Patentblatt 86/52

(45) Bekanntmachung des Hinweises auf die Patenterteilung:
21.06.89 Patentblatt 89/25

(84) Benannte Vertragsstaaten:
AT CH DE FR GB IT LI

(56) Entgegenhaltungen:
EP-A- 0 022 222
EP-A- 0 112 143
EP-A- 0 137 270
DE-A- 2 740 464
US-A- 3 801 845

(73) Patentinhaber: WABCO Westinghouse
Fahrzeugbremsen GmbH, Am Lindener
Hafen 21 Postfach 91 12 80, D-3000 Hannover 91(DE)

(72) Erfinder: Höfler, Siegfried, Dipl.-Ing., Kleine
Pfahlstrasse 8, D-3000 Hannover 1(DE)
Erfinder: Rode, Konrad, Dipl.-Ing., An der Rotbuche 3,
D-3016 Seelze 3(DE)
Erfinder: Schmidt, Reinhard, Dipl.-Ing., Wiesenstrasse 1,
D-3160 Lehrte(DE)

(74) Vertreter: Schrödter, Manfred, WABCO Westinghouse
Fahrzeugbremsen GmbH Am Lindener
Hafen 21 Postfach 91 12 80, D-3000 Hannover 91(DE)

ACTORUM AG

**Beschreibung**

Die Erfindung betrifft eine Einrichtung zur Gewinnung von Drehzahl- und/oder Drehwinkelsignalen an einer Gelenkwelle nach dem Oberbegriff des Patentanspruchs 1.

Es ist bekannt, eine derartige Einrichtung dadurch herzustellen, daß an dem Abtriebsflansch der Gelenkwell oder einem mit diesem umlaufenden Bauteil ein Impulsgeber angebracht wird, dessen Impulse von einem Sensor erfaßt werden, der an einem sich nicht mitdrehenden Bauteil in der Nachbarschaft des Abtriebsflansches befestigt ist.

Nachteilig ist bei der bekannten Lösung ihr Platzbedarf. Insbesondere ist es in vielen Anwendungsfällen schwierig, den für die Unterbringung des Sensors erforderlichen Einbauraum zur Verfügung zu stellen.

Der Erfindung liegt deshalb die Aufgabe zugrunde, eine Einrichtung der eingangs genannten Art mit einfachen Mitteln so zu verbessern, daß sie sich mit geringem Platzbedarf einsetzen läßt.

Diese Aufgabe wird durch die im Patentanspruch 1 angegebene Erfindung gelöst. Weiterbildungen und vorteilhafte Ausgestaltungen sind in den Unteransprüchen angegeben.

Eine erfindungsgemäße Einrichtung ist in allen technischen Gebieten, in denen Drehmomente über Wellenstränge mit in unterschiedliche Winkellagen zueinander verstellbaren Teilen übertragen werden, einsetzbar.

In Einsatzfällen, in denen die bekannte Einrichtung starker Verschmutzung ausgesetzt und deshalb störanfällig ist, bietet die Erfindung den Vorteil einer weitestgehend verschmutzungsfreien Anordnung mit geringem Ausfallrisiko.

Die Erfindung schafft auch eine vorteilhafte Lösung für solche Einsatzfälle, in denen die bekannte Einrichtung erhöhten Temperaturen und dadurch bedingt erhöhtem Störungsrisiko ausgesetzt ist. Ein derartiger Einsatzfall liegt beispielsweise vor, wenn in der Nachbarschaft des Abtriebsflansches eine Bremseinrichtung vorhanden ist.

Aufgrund der geschilderten Vorteile ist die Erfindung vorteilhaft in einer angetriebenen Lenkachse eines Kraftfahrzeugs einsetzbar, bei der sich der Abtriebsflansch in der Nähe des Rades und der Radbremse befindet, wodurch der Bereich des Abtriebsflansches nicht nur knappen Einbauraum bietet, sondern darüber hinaus starker Verschmutzung und starker Wärmeentwicklung ausgesetzt ist. In diesem Fall mindert die Erfindung auch die Gefahr der Beschädigung der Einrichtung durch Steinschlag.

Die Erfindung ermöglicht die Gewinnung der Drehzahlund/oder Drehwinkelsignale sowohl auf induktivem als auch auf opto-elektrischem als auch auf kapazitivem Wege oder auch nach dem Hall-Verfahren oder dem Weigand-Verfahren oder nach dem magneto-resistiven Prinzip.

In einer vorteilhaften Ausgestaltung ist der Sensor in dem hohl ausgebildeten Schwenkbolzen angeordnet. Der Sensor kann aber auch an anderer Stelle des Schwenkbolzens angeordnet sein, z.B. an seiner seitlichen oder stirnseitigen Außenfläche durch bekannte Mittel befestigt sein. Stirnseitig kann der Sensor insbesondere an der auf. das Drehgelenk zuzeigenden Stirnseite des Schwenkbolzens angeordnet sein.

In einer vorteilhaften Ausführungsform ist der Sensor in Richtung der Längsachse des Schwenkbolzens, beispielsweise konzentrisch dazu, angeordnet, wobei er in vorteilhafter Weise mit seinem sensitivem Ende radial von außen auf das Drehgelenk zuweisen kann. Insbesondere kann der Sensor mit seinem einen sensitiven Ende den Schwenkbolzen auch in Richtung des Drehgelenks durchdringen.

Ist die Einrichtung induktiv ausgebildet, kann der Sensor aus einem Grundsensor und einem Flußübertrager aus einem weichmagnetischen Schaft, der an beliebiger Stelle einen Permanentmagneten trägt, gebildet werden. Der Flußübertrager kann in diesem Fall das den Schwenkbolzen durchdringende Ende des Sensors darstellen. Vorzugsweise kann der Permanentmagnet am drehgelenkseitigen Ende des Flußübertragers angeordnet sein. Der Permanentmagnet wird wegen der damit möglichen kleinen Bauabmessungen vorzugsweise aus Seltenen Erden gebildet. Die Lösung mit Flußübertrager ist insbesondere dann vorteilhaft, wenn ein billiger oder gerade verfügbarer, aber an sich zu kurzer Grundsensor wie oben beschrieben eingesetzt werden soll.

Der Impulsgeber kann in seiner Längserstreckung besonders klein gehalten werden, wenn er auf dem Umfang des Drehgelenks derart angeordnet ist, daß seine Umlaufbahn bzw. die Mantelfläche, die er beim Drehen der Gelenkwelle beschreibt, wenigstens in ihrem dem Schwenkbolzen zugewandten Bereich von der Schwenkachse durchdrungen wird.

Der Impulsgeber kann, wenn die Erfindung zur Gewinnung von Drehzahlsignalen eingesetzt ist, eine auf seinem Umfang gleichmäßig verteilte Anzahl von Nuten, zwischen denen verzahnungsartig radiale Erhebungen stehen, aufweisen. Soll die Erfindung zusätzlich oder ausschließlich zur Gewinnung von Drehwinkel- (d.h. Drehstellungs-) signalen dienen, kann der Impulsgeber zusätzlich oder ausschließlich eine oder mehrere dazu geeignete Markierung(en), beispielsweise in Form besonders ausgebildeter Nut(en) oder Erhebung(en) aufweisen.

In vorteilhafter Weise kann der Impulsgeber am radial äußersten Teil der Mantelfläche des Drehgelenks angeordnet sein.

Der wie beschrieben mit Nuten bzw. Erhebungen versehene Impulsgeber kann in vorteilhafter Weise auf einem Außenring des Drehgelenks ausgebildet sein.

Die Erfindung ist sowohl an Gelenkwellen mit Gleichlaufgelenk als auch an solchen mit Kreuzgelenk einsetzbar. Im letztgenannten Fall kann der erwähnte Außenring aus die Zapfen des Gelenkkreuzes verbindenden Ringsegmenten zusammengesetzt sein, aber auch als in sich geschlossener Ring über die radialen Stirnseiten des Gelenkkreuzes geschoben sein und auf diese Weise das Gelenkkreuz einhüllen.

Ein als Gleichlaufgelenk ausgebildetes Drehgelenk weist in der Regel den Gelenkausgleich bewirkende und das Drehmoment übertragende Körper auf, deren äußere Führung von einem mit dem einen Wellenteil drehfest verbundenen Gehäuse ausgeübt wird, welches deshalb zugleich als Außenring des Drehgelenks dient. Dieses·Gehäuseteil selbst kann in einer Ausführungsform mit den Nuten bzw. Erhebungen des Impulsgebers versehen sein. In einer anderen Ausführungsform kann der Impulsgeber als Ring ausgebildet und auf dem als Außenring dienenden Gehäuseteil angebracht, beispielsweise aufgeschrumpft, sein. In dieser Ausführungsform kann, wenn das Drehgelenk nach außen durch ein flexibles Bauteil, z.B. einen Faltenbalg abgeschlossen wird, der Impulsgeber in einer kostengünstigen Ausgestaltung zugleich als Spannband zur Befestigung dieses Bauteils an dem Gehäuseteil ausgebildet sein.

Die Erfindung wird nachstehend anhand von in den Zeichnungen dargestellten Ausführungsbeispielen erläutert.

Es zeigen:

Fig. 1 die Antriebswelle einer angetriebenen Lenkachse eines Kraftfahrzeugs in Starrachsausführung,

Fig. 2 die Antriebswelle einer angetriebenen Lenkachse eines Kraftfahrzeugs mit Einzelradaufhängung.

Darin werden für gleiche Funktionen durchgehend gleiche Bezugszeichen verwendet.

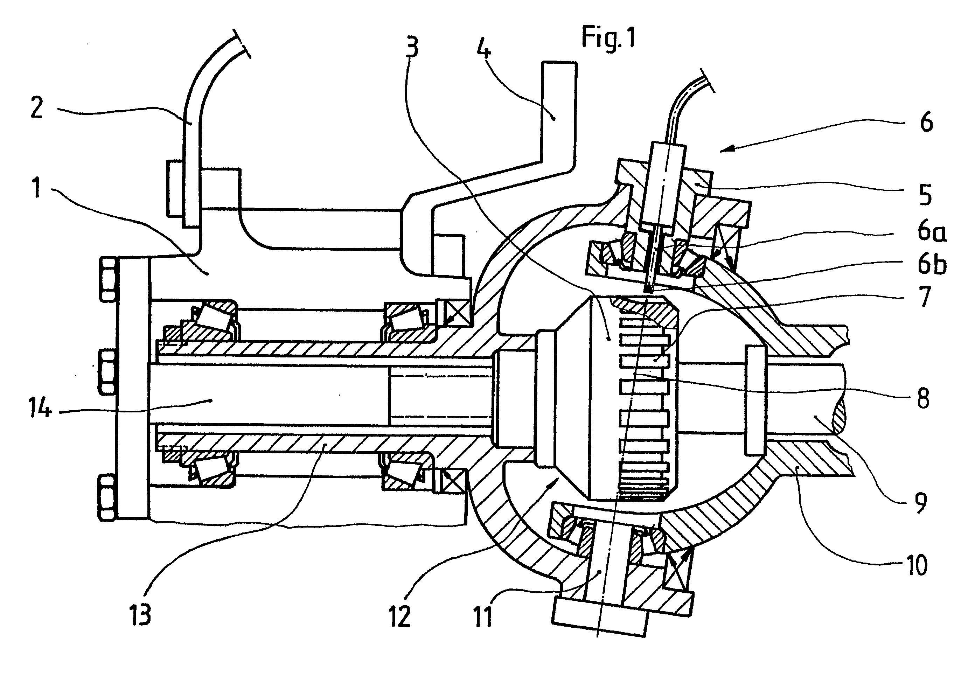

Fig. 1 zeigt eine Gelenkwelle, die aus zwei Wellenteilen 9,14, deren eines eine Antriebswelle 9 und deren anderes eine Abtreibswelle 14 ist, und einem diese verbindenen Drehgelenk 12 besteht.

Das Drehgelenk 12 ist als Gleichlaufgelenk ausgebildet und weist ein Gehäuseteil 3 auf, welches die äußere Führung der Körper des Drehgelenks 3 übernimmt und damit zugleich dessen Außenring ist.

Das Gehäuseteil 3 ist in nicht näher bezeichneter Weise in einem Schwenkgehäuse 13 gelagert, welches im vorliegenden Fall als Achsschenkel dient. Auf dem Achsschenkel 13 ist in nicht näher beschriebener Weise eine Radnabe 1 drehbar, aber axial festgelegt, gelagert. Die Abtriebswelle 14 ist an ihrem gelenkseitigen Ende in dem Gehäuseteil 3 gelagert und mit diesem über eine Keilverzahnung drehfest verbunden und an ihrem anderen Ende über einen nicht näher bezeichneten Abtriebsflansch mit der Radnabe 1 verschraubt. Auf diese Weise ist die Abtriebswelle 14 in dem Achsschenkel 13 radial und auch axial gelagert.

An der Radnabe 1 sind in bekannter und nicht näher beschriebener Weise ein Rad 2 und eine Bremsscheibe 4 befestigt.

Die Antriebswelle 9 ist in nicht näher beschriebener Weise in einem Achsgehäuse 10 gelagert und mit einem nicht näher beschriebenen Antriebsteil des Drehgelenks drehfest verbunden.

Der Achsschenkel 13 ist mit dem Achsgehäuse 10 über einen oberen Achsschenkelbolzen 5 verbunden, dessen Mitte eine durch 8 symbolisierte Schwenkachse definiert, um die der Achsschenkel 13 gegenüber dem Achsgehäuse 10 und damit auch die Abtriebswelle 14 gegenüber der Antriebswelle 9 aus der Zeichnungsebene nach vorn oder nach hinten schwenkbar sind. Der obere Achsschenkelbolzen 5 stellt damit einen konzentrisch zur Schwenkachse 8 angeordneten Schwenkbolzen dar. Die erwähnte Schwenkung stellt für das mit dieser Einrichtung ausgerüstete Fahrzeug einen Lenkeinschlag dar und wird durch einen nicht dargestellten Lenkhebel bewirkt.

In Bezug auf die Drehachse(n) der Gelenkwelle stützt der obere Achsschenkelbolzen 5 den Achsschenkel 13 drehfest an dem seinerseits drehfest im Fahrgestell gelagerten Achsgehäuse 10 ab. Zur Entlastung des oberen Achsschenkelbolzens 5 ist konzentrisch dazu, d.h. also auch konzentrisch zur Schwenkachse 8, noch ein unterer Achsschenkelbolzens 11 vorgesehen.

Das Drehgelenk 3 ist derart angeordnet, daß die Schwenkachse 8 durch den Gelenkmittelpunkt geht. Durch diese Anordnung, infolge derer die Schwenkachse 8 die Drehachse der Gelenkwelle (wenn ungeschwenkt) bzw. die Drehachsen der Gelenkwelle (nämlich der einzelnen Wellenteile 9,14, wenn geschwenkt) schneidet, wird die erwähnte Schenkung ermöglicht.

Auf der Mantelfläche des Drehgelenks 12, genauer auf der Mantelfläche des als dessen Außenring dienenden Gehäuseteils 3, ist ein umlaufender durch 7 symbolisierter Impulsgeber angeordnet. Dieser besteht, wie durch einen Teilschnitt durch den in der Zeichnung oben liegenden Bereich des Gehäuseteils 3 angedeutet, aus in das Gehäuseteil 3 eingearbeiteten Nuten und dazwischen stehenden verzahnungsartigen Erhebungen. Nuten und Erhebungen sind in gleichmäßigen Abständen auf der Mantelfläche des Gehäuseteils 3 verteilt. Der Impulsgeber kann auch als selbständiger Ring ausgebildet und auf dem Gehäuseteil befestigt, z.B. aufgeschrumpft oder aufgepreßt, sein.

Der obere Achsschenkelbolzen 5 ist hohl ausgebildet. In seinem Innenraum ist ein in bekannter Weise aufgebauter induktiver Sensor 6 angeordnet.

Im Ausführungsbeispiel ist der Sensor 6 konzentrisch in Längsrichtung des Achsschenkelbolzens 5 angeordnet und durchdringt letzteren mit seinem sensitiven Ende in Richtung des Drehgelenks 12. Das sensitive Ende besteht aus einem weichmagnetischen Schaft 6a und einem an dessen Spitze angeordneten Permanentmagneten 6b. Der Permanentmagnet kann auch an beliebig anderer Stelle des Schafts angeordnet sein. Der eigentliche Sensor besteht aus einem marktgängigen und daher preisgünstigen Grundsensor. Der Impulsgeber 7 ist so angeordnet, daß die von ihm beim Drehen der Gelenkwelle beschriebene Mantelfläche in ihrem dem oberen Achsschenkelbolzen 5 und damit dem sensitiven Ende des Sensors 6 zugewandten, in der Zeichnung oben liegenden Bereich von der Schwenkachse 8 durchdrungen wird. Diese Anordnung hat zur Folge, daß bei jedem Schwenkwinkel der Wellenteile 9,14 zueinander beim Drehen der Gelenkwelle die Nuten bzw. Erhebungen des Impulsgebers 7 in gleicher Relativlage zum Gehäuseteil 3 unter dem Achsschenkelbolzen 5 bzw. dem sensitivem Ende des Sensors 6 durch laufen. Dies bedeutet einerseits, daß auch bei gegenüber der oder den Drehachse(n) der Gelenkwelle verschränkter Anordnung der Schwenkachse 8 das sensitive Ende des Sensors 6 bzw. der Achsschenkelbolzen 5 stets gleichen Abstand vom Impulsgeber 7 haben. Andererseits bedeutet das, daß der Impulsgeber 7 praktisch nur mit einer Linie unter dem sensitivem Ende des Sensors 6 bzw. dem Achsschenkelbolzen 5 durchläuft, weshalb der Impulsgeber in seiner und des Gehäuseteils 3 Längserstreckung klein (schmal) gehalten werden kann.

Es liegt auf der Hand, daß, wenn die Stärke des von dem Sensor erzeugten Feldes ausreicht, der Sensor und der Impulsgeber auch anders als dargestellt angeordnet werden können. Beispielsweise kann der Sensor auch quer im Achsschenkelbolzen oder in dessen Längsrichtung exzentrisch angeordnet werden. Der Impulsgeber kann gegenüber der Darstellung in Längsrichtung des Gehäuseteils derart versetzt angeordnet werden, daß die Schwenkachse 8 ihn nicht durchdringt. In diesem Fall würde bei verschränkter Anordnung der Schwenkachse mit unterschiedlichen Schwenkwinkeln der Sensor bzw. sein sensitives Ende bzw. die Lage des vom Sensor erzeugten Feldes in Längsrichtung des Gehäuseteils relativ zu diesem wandern, weshalb in diesem Fall der Impulsgeber ausreichend breit ausgebildet sein müßte.

Beim Drehen der Gelenkwelle werden durch die Nuten bzw. Erhebungen des Impulsgebers in dem von dem Sensor 6 erzeugten Feld Störungen induziert, welche vom Sensor 6 erfaßt und in bekannter Weise einer Auswerteeinrichtung als Drehzahlsignale zugeführt werden.

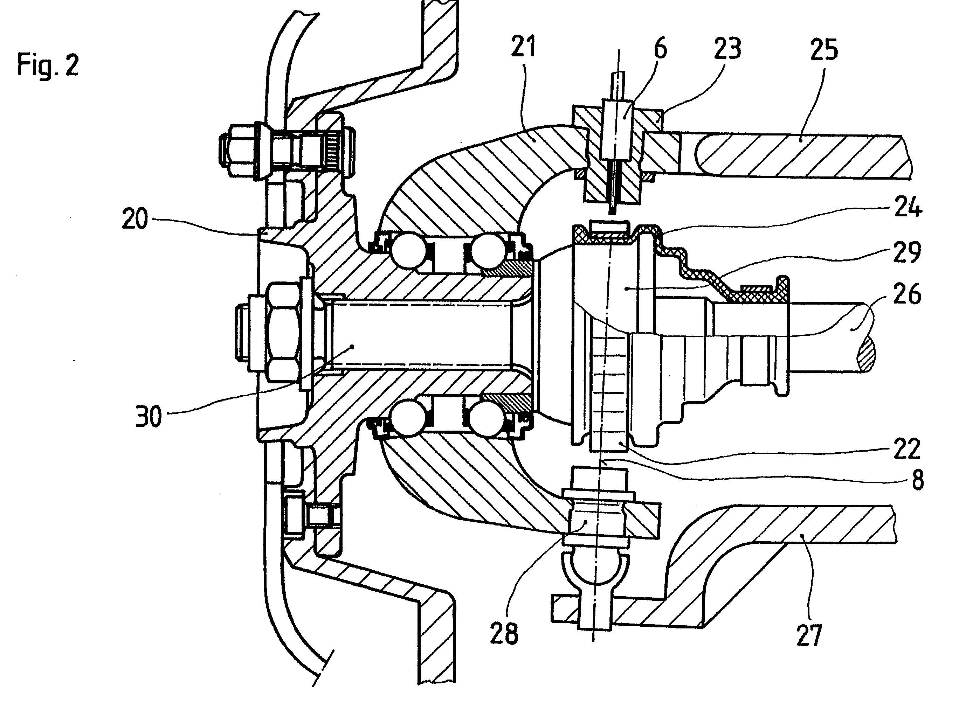

Für das Ausführungsbeispiel nach Fig. 2 gelten die vorstehenden Ausführungen unter Berücksichtigung der folgenden Besonderheiten entsprechend.

Der hier mit 21 bezeichnete, als Schwenkgehäuse dienende Achsschenkel, ist über den hier mit 23 bezeichneten oberen Achsschenkelbolzen drehfest, aber in der Zeichnungsebene gelenkig an einem durch 25 gekennzeichneten oberen Querlenker abgestützt. Der obere Achsschenkelbolzen 23 muß zu diesem Zweck in bekannter und nicht näher dargestellter Weise mit Querzapfen zur Verbindung mit dem Querlenker 25 versehen sein.

Der konzentrisch zur Schwenkachse 8 angeordnete untere Achsschenkelbolzen 28 ist in bekannter Weise als Kugelgelenkbolzen ausgebildet und zur Herstellung des Kräfte- und Momentengleichgewichts am Achsschenkel 21 über sein Kugelgelenk gelenkig mit einem unteren Querlenker 27 verbunden.

Die Radnabe 20 ist in diesem Fall auf die Abtriebswelle 30 aufgeschoben und mit dieser über eine Keilverzahnung drehfest verbunden.

Die Lagerung der Abtriebswelle 30 und der Radnabe 20 im Achsschenkel 21 erfolgt in diesem Fall in nicht näher bezeichneter Weise durch Wälzlager zwischen Radnabe 20 und Achsschenkel 21. Die Wälzlager übernehmen auch die Axiallagerung des wieder als Gleichlaufgelenk ausgebildeten Drehgelenks.

In Ermangelung eines Achsgehäuses ist in diesem Fall das Drehgelenk zur Antriebswelle 26 hin durch ein als Faltenbalg ausgebildetes flexibles Bauteil 24 abgeschlossen. Der Faltenbalg 24 ist auf dem in diesem Fall mit 29 bezeichneten Gehäuseteil mittels eines Spannbands befestigt, welches zugleich als Impulsgeber 22 ausgebildet ist und dem auf seinem Außenumfang die als Impulsmarken erforderlichen Nuten eingeprägt sind. Es liegt auf der Hand, daß das Spannband seiner Funktion als Impulsgeber 22 entsprechend ausreichend genau gefertigt und mit einem seinen Außenumfang nicht wesentlich vergrößernden Einhakverschluß versehen sein muß.

Die in den Ausführungsbeispielen zur Gewinnung von Drehzahlsignalen ausgebildeten Impulsgeber können auch in der weiter vorn beschriebenen Art zusätzlich oder ausschließlich zur Gewinnung von Drehwinkel(Drehstellungs-)signalen ausgebildet sein. Impulsgeber und Sensor können auch zur Signalgewinnung nach jedem anderen geeigneten Verfahren, z.B. optoelektrischen oder kapazitiven oder nach dem Hall-Prinzip, ausgebildet sein. Es liegt auf der Hand, daß der in den Ausführungsbeispielen im oberen Achsschenkelbolzen angeordnete Sensor auch im unteren Achsschenkelbolzen angeordnet werden kann. Es sind auch Einsatzfälle denkbar, in denen in beiden Achsschenkelbolzen Sensoren angeordnet sind, wobei beispielsweise der eine Drehzahlsignale und der andere Drehwinkelsignale erfassen könnte.

Es liegt auch auf der Hand, daß die vorstehend für Gleichlaufgelenke gemachten Ausführungen in entsprechender Weise und unter Berücksichtigung der eingangs angegebenen Einzelheiten auch im Falle der Ausbildung des Drehgelenks als Kreuzgelenk gelten.

Schließlich ist dem Fachmann auch ersichtlich, daß die vorstehend anhand angetriebener Lenkachsen für Kraftfahrzeuge beschriebenen Ausführungsbeispiele den Anwendungsbereich der Erfindung nicht erschöpfend beschreiben.

**Patentansprüche**

1. Einrichtung zur Gewinnung von Drehzahl- und/oder Drehwinkelsignalen an einer Gelenkwelle, die aus zwei Wellenteilen und einem diese miteinander drehfest verbindenden Drehgelenk besteht, wobei wenigstens ein Wellenteil wenigstens radial in einem Schwenkgehäuse oder dergl. gelagert ist und mit diesem um eine durch den Gelenkmittelpunkt gehende Schwenkachse schwenkbar ist, und wobei das Schwenkgehäuse mittels wenigstens eines konzentrisch zur Schwenkachse angeordneten Schwenkbolzens drehfest abgestützt ist, dadurch gekennzeichnet, daß ein Impulsgeber (7,22) auf der Mantelfläche des Drehgelenks (12) und ein die von dem Impulsgeber (7,22) erzeugten Impulse erfassender Sensor (6) an dem Schwenkbolzen (5,23) angeordnet ist.

2. Einrichtung nach Anspruch 1, dadurch gekennzeichnet, daß der Impulsgeber (7,22) auf dem radial äußersten Teil der Mantelfläche des Drehgelenks (12) angeordnet ist.

3. Einrichtung nach einem der Ansprüche 1 oder 2, dadurch gekennzeichnet, daß der Sensor (6) in dem hohl ausgebildeten Schwenkbolzen (5,23) angeordnet ist.

4. Einrichtung nach Anspruch 3,
dadurch gekennzeichnet, daß der Sensor (6) in Längsrichtung des Schwenkbolzens (5,23) angeordnet ist.

5. Einrichtung nach Anspruch 4,
dadurch gekennzeichnet, daß der Sensor (6) mit seinem einen Ende den Schwenkbolzen (5,23) in Richtung des Drehgelenks (12) durchdringt.

6. Einrichtung nach Anspruch 5,
dadurch gekennzeichnet, daß der Sensor (6) aus einem induktiven Grundsensor und einem aus einem weichmagnetischen Schaft (6a) und einem beliebig auf dem Schaft (6a) angeordneten Permanentmagneten (6b) bestehenden Flußübertrager (6a, 6b) gebildet ist, wobei der Flußübertrager das den Schwenkbolzen (5) durchdringende Ende des Sensors (6) ist.

7. Einrichtung nach einem der vorhergehenden Ansprüche,
dadurch gekennzeichnet, daß der Impulsgeber (7,22) auf der Mantelfläche des Drehgelenks (12) derart angeordnet ist, daß seine Umlaufbahn bzw. die Mantelfläche, die er beim Drehen der Gelenkwelle beschreibt, wenigstens in ihrem dem Schwenkbolzen (5,23) zugewandten Bereich von der Schwenkachse (8) durchdrungen wird.

8. Einrichtung nach einem der vorhergehenden Ansprüche,
dadurch gekennzeichnet, daß der Impulsgeber (7,22) an einem Außenring des Drehgelenks (12) ausgebildet ist und zur Herstellung von Impulsmarken an seinem Außenumfang genutet ist.

9. Einrichtung nach Anspruch 8,
dadurch gekennzeichnet, daß das Drehgelenk als Kreuzgelenk ausgebildet ist und der Außenring aus die Zapfen des Gelenkkreuzes verbindenden Ringsegmenten zusammengesetzt ist.

10. Einrichtung nach Anspruch 8,
dadurch gekennzeichnet, daß das Drehgelenk als Kreuzgelenk ausgebildet ist und der Außenring als das Gelenkkreuz einhüllender geschlossener Ring ausgebildet ist.

11. Einrichtung nach Anspruch 8,
dadurch gekennzeichnet, daß der Außenring als Gehäuseteil (3,29) des als Gleichlaufgelenk ausgebildeten Drehgelenks (12) ausgebildet ist.

12. Einrichtung nach Anspruch 8
dadurch gekennzeichnet, daß der als Ring ausgebildete Impulsgeber auf einem als Außenring dienenden Gehäuseteil des als Gleichlaufgelenk ausgebildeten Drehgelenks angebracht ist.

13. Einrichtung nach Anspruch 12,
dadurch gekennzeichnet, daß der Impulsgeber (22) zugleich als Spannband zur Befestigung eines das Drehgelenk nach außen abschließenden flexiblen Bauteils (24) an dem Außenring (29) ausgebildet ist.

**Claims**

1. Device for obtaining rotational speed and/or rotational angle signals on an articulated shaft consisting of two shaft members and a pivot joint joining them to one another against relative rotation, at least one shaft member being mounted at least radially in a pivot housing or the like and being pivotable therewith about a pivot axis passing through the central point of the joint, and the pivot housing being non-rotatably mounted by means of at least one pivot pin arranged coaxially with the pivot axis, characterised in that a pulse generator (7, 22) is arranged on the outer surface of the pivot joint (12) and a sensor (6) that detects the pulses generated by the pulse generator (7, 22) is arranged on the pivot pin (5, 23).

2. Device according to claim 1, characterised in that the pulse generator (7, 22) is arranged on the radially outermost portion of the outer surface of the pivot joint (12).

3. Device according to claim 1 or 2, characterised in that the sensor (6) is arranged in the pivot pin (5, 23) which is of hollow construction.

4. Device according to claim 3, characterised in that the sensor (6) is arranged in the longitudinal direction of the pivot pin (5, 23).

5. Device according to claim 4, characterised in that one end of the sensor (6) passes through the pivot pin (5, 23) in the direction of the pivot joint (12).

6. Device according to claim 5, characterised in that the sensor (6) is formed by an inductive base sensor and a flux transmitter (6a, 6b) consisting of a soft-magnetic shaft (6a) and a permanent magnet (6b) arranged on the shaft (6a) as desired, the flux transmitter being the end of the sensor (6) that passes through the pivot pin (5).

7. Device according to any one of the preceding claims, characterised in that the pulse generator (7, 22) is arranged on the outer surface of the pivot joint (12) in such a manner that the pivot axis (8) passes through the rotational path of the pulse generator, or through the generated surface that it describes when the articulated shaft rotates, at least in its region facing the pivot pin (5, 23).

8. Device according to any one of the preceding claims, characterised in that the pulse generator (7, 22) is constructed on an outer ring of the pivot joint (12) and is provided with grooves on its outer circumference to produce pulse marks.

9. Device according to claim 8, characterised in that the pivot joint is constructed in the form of a universal joint and the outer ring is composed of ring segments joining the pegs of the crosspiece of the joint.

10. Device according to claim 8, characterised in that the pivot joint is constructed in the form of a universal joint and the outer ring is constructed in the form of a closed ring enclosing the crosspiece of the joint.

11. Device according to claim 8, characterised in that the outer ring is constructed in the form of a housing member (3, 29) of the pivot joint (12) which is constructed in the form of a constant-velocity joint.

12. Device according to claim 8, characterised in that the pulse generator which is constructed in the form of a ring is attached to a housing part serving as an outer ring of the pivot joint which is constructed in the form of a constant-velocity joint.

13. Device according to claim 12, characterised in that the pulse generator (22) is constructed to be at the same time a tensioning band for affixing to the outer ring (29) a flexible component (24) which seals the pivot joint towards the outside.

## Revendications

1. Dispositif de détection de signaux de vitesse et/ou d'angle de rotation sur un arbre articulé qui est constitué de deux portions d'arbre et d'un joint articulé rotatif qui les relie l'une à l'autre sans possibilité de rotation relative, étant précisé qu'au moins une portion d'arbre porte au moins radialement dans un carter pivotant ou analogue et peut pivoter avec celui-ci autour d'un axe de pivotement qui passe par le centre du joint articulé, et étant précisé que le carter pivotant est supporté, sans possibilité de rotation relative, au moyen d'au moins un pivot disposé concentriquement à l'axe de pivotement, caractérisé en ce qu'un émetteur d'impulsions (7, 22) est disposé sur la surface latérale du joint articulé rotatif (12) et en ce qu'un détecteur (6), qui saisit les impulsions produites par l'émetteur d'impulsions (7, 22), est disposé sur le pivot (5, 23).

2. Dispositif selon la revendication 1, caractérisé en ce que l'émetteur d'impulsions (7, 22) est disposé sur la partie radialement la plus extérieure de la surface latérale du joint articulé rotatif (12).

3. Dispositif selon l'une des revendications 1 ou 2, caractérisé en ce que le détecteur (6) est disposé dans le pivot (5, 23) conçu creux.

4. Dispositif selon la revendication 3, caractérisé en ce que le détecteur (6) est disposé dans la direction longitudinale du pivot (5, 23).

5. Dispositif selon la revendication 4, caractérisé en ce que, par l'une de ses extrémités, le détecteur (6) traverse le pivot (5, 23) en direction du joint articulé rotatif (12).

6. Dispositif selon la revendication 5, caractérisé en ce que le détecteur (6) est formé d'un détecteur de base inductif et d'un transmetteur de flux (6a, 6b) constitué d'un fût magnétique (6a) et d'un aimant permanent (6b) disposé en un endroit quelconque sur le fût (6a), étant précisé que le transmetteur de flux est l'extrémité du détecteur (6) qui traverse le pivot (5).

7. Dispositif selon l'une des revendications précédentes, caractérisé en ce que l'émetteur d'impulsions (7, 22) est disposé sur la surface latérale du joint articulé rotatif (12) de façon telle que sa voie périphérique, ou la surface latérale qu'il décrit lors de la rotation de l'arbre articulé, est traversée, au moins dans sa zone côté du pivot (5, 23), par l'axe de pivotement (8).

8. Dispositif selon l'une des revendications précédentes, caractérisé en ce que l'émetteur d'impulsions (7, 22) est prévu sur une bague extérieure du joint articulé rotatif (12); et en ce qu'il est rainuré sur sa périphérie extérieure pour donner les repères d'impulsions.

9. Dispositif selon la revendication 8, caractérisé en ce que le joint articulé rotatif est conçu comme joint à cardan; et en ce que la bague extérieure est composée de segments annulaires reliant les axes du croisillon.

10. Dispositif selon la revendication 8, caractérisé en ce que le joint articulé rotatif est conçu comme joint à cardan; et en ce que la bague extérieure est conçue comme bague fermée enveloppant le croisillon du cardan.

11. Dispositif selon la revendication 8, caractérisé en ce que la bague extérieure est conçue comme corps (3, 29) du joint articulé rotatif (12) lui-même conçu comme joint homocinétique.

12. Dispositif selon la revendication 8, caractérisé en ce que l'émetteur d'impulsions conçu comme bague est rapporté sur un corps, servant de bague extérieure, du joint articulé rotatif conçu comme joint homocinétique.

13. Dispositif selon la revendication 12, caractérisé en ce que l'émetteur d'impulsions (22) est en même temps conçu comme collier se serrage pour la fixation, sur la bague extérieure (29), d'un composant flexible (24) obturant vers l'extérieur le joint articulé rotatif.

Fig.1

EP 0 205 763 B1

Fig. 2